# EUROPÄISCHE PATENTSCHRIFT

(11) **EP 4 527 065 B1**
(45) Veröffentlichungstag und Bekanntmachung des Hinweises auf die Patenterteilung: **10.09.2025**
(21) Anmeldenummer: 23726006.2
(22) Anmeldetag: 09.05.2023
(51) Int. Cl.: H04M 11/04, G08B 25/01, H04M 1/72421, H04W 76/50

(54) **ROBUSTES NOTRUFVERFAHREN UND STEUERGERÄT FÜR EIN FAHRZEUG SOWIE LEITSTELLE**
ROBUST EMERGENCY CALL METHOD AND CONTROLLER FOR A VEHICLE, AND COORDINATION CENTER
PROCÉDÉ D'APPEL D'URGENCE ROBUSTE ET DISPOSITIF DE COMMANDE POUR UN VÉHICULE, ET CENTRE DE COORDINATION

(30) Priorität: 20.05.2022 DE 102022112676
(43) Veröffentlichungstag der Anmeldung: 26.03.2025
(73) Patentinhaber: AUDI AG, 85057 Ingolstadt (DE)
(72) Erfinder: HEHN, Thorsten, 85055 Ingolstadt (DE); DIETRICH, Oleg, 90469 Nürnberg (DE); RABHANSL, Christoph, 85051 Ingolstadt (DE)
(74) Vertreter: RDL Patentanwälte PartG mbB
(86) Internationale Anmeldenummer: PCT/EP2023/062284
(87) Internationale Veröffentlichungsnummer: WO 2023/222460

(56) Entgegenhaltungen:
- DE-T5- 112018 000 928
- US-A1- 2009 186 596
- US-A1- 2017 374 538

## Beschreibung

Die Erfindung betrifft ein Verfahren zum Absetzen eines Notrufs eines Fahrzeugs, bei dem ein Steuergerät eines Fahrzeugs nach einem Unfall automatisch eine erste Verbindung zu einer Leitstelle herstellt und über die hergestellte erste Verbindung einen Notruf absetzt. Ferner betrifft die Erfindung ein Steuergerät für ein Fahrzeug und eine Leitstelle zum Empfangen eines Notrufs eines Fahrzeugs.

Verfahren der eingangs genannten Art zum Absetzen eines Notrufs eines Fahrzeugs, kurz Notrufverfahren, gehören in unterschiedlichen Ausgestaltungen zum Stand der Technik und dienen dazu, mittels des abgesetzten Notrufs eine geeignete Hilfeleistung von einer Leitstelle anzufordern.

Wenn ein Fahrer eines Fahrzeugs mit einem Dienstleister (Third Party Service Provider, TPSP), beispielsweise einem Hersteller des Fahrzeugs, einen Vertrag über eine Hilfeleistung nach einem Unfall abgeschlossen hat, soll das Fahrzeug den Notruf nach Möglichkeit bei einer von dem Dienstleister bereitgestellten privaten Leitstelle, d. h. einer Vertragsleitstelle, absetzen.

Zu diesem Zweck offenbart DE 11 2011 101 204 B4 ein Verfahren zum Absetzen eines Notrufs eines Fahrzeugs, bei dem das Fahrzeug den Notruf bei einer Vertragsleitstelle absetzt, wenn eine zu einem von einem Mobilfunknetz gesendeten Ländercode korrespondierende Vertragsleitstelle existiert, oder bei einer Nichtvertragsleitstelle absetzt, wenn eine zu dem gesendeten Ländercode korrespondierende Nichtvertragsleitstelle existiert.

Eine Wahrscheinlichkeit, dass der abgesetzte Notruf die angeforderte geeignete Hilfeleistung bewirkt, wird hier als eine Erfolgswahrscheinlichkeit des abgesetzten Notrufs bzw. als eine Robustheit des jeweiligen Notrufverfahrens bezeichnet. Ein robustes Notrufverfahren weist eine hohe Erfolgswahrscheinlichkeit des abgesetzten Notrufs auf.

Eine notwendige Voraussetzung zum Absetzen des Notrufs ist die Verbindung zu der Leitstelle. Entsprechend sind Notrufverfahren robuster, welche die Verbindung zu der Leitstelle mit einer höheren Wahrscheinlichkeit herstellen.

So offenbart DE 11 2018 000 928 T5 ein Verfahren zum Absetzen eines Notrufs eines Fahrzeugs, bei dem das Fahrzeug eine zweite Verbindung zu einer Leitstelle herstellt, wenn ein Herstellen einer ersten Verbindung zu der Leitstelle erfolglos gewesen ist.

Ein ähnliches Verfahren zum Absetzen eines Notrufs eines Fahrzeugs wird von US 7,991,381 B1 beschrieben. Dabei stellt das Fahrzeug eine erste Sprechverbindung zu einer Leitstelle her. Wenn das Herstellen der ersten Sprechverbindung erfolglos ist, stellt das Fahrzeug eine zweite Sprechverbindung zu der Leitstelle her. Wenn auch das Herstellen der zweiten Sprechverbindung erfolglos ist, stellt das Fahrzeug schließlich eine Datenverbindung zu der Leitstelle her.

US 2017/374538 A1 offenbart ein weiteres Verfahren zum Absetzen eines Notrufs, bei dem ein Fahrzeug einen minimalen Datensatz (Minimal Set of Data, MSD) zu einer gesetzlichen Leitstelle (Public Safety Answering Point, PSAP) überträgt, wenn eine Sprechverbindung zu der Leitstelle nicht zustande kommt.

Ein weiteres Verfahren zum Absetzen eines Notrufs ist aus US 2009/0186596 A1 bekannt. Ein Fahrzeug stellt eine Datenverbindung zu einem stationären Server her und überträgt über die hergestellte Datenverbindung einen Unfall des Fahrzeugs betreffende Daten zu dem stationären Server. Zudem stellt das Fahrzeug eine Sprechverbindung zu einer gesetzlichen Leitstelle her und überträgt über die hergestellte Sprechverbindung Zugangsdaten zu dem stationären Server.

Die Robustheit des Notrufverfahrens kann durch eine Mehrzahl von Fehlerquellen beeinträchtigt sein. Beispielsweise können eine Fehlfunktion einer Kommunikationseinheit des Fahrzeugs, eine Fehlfunktion der Leitstelle oder ein Fehlverhalten eines Insassen des Fahrzeugs die Robustheit des Notrufverfahrens verringern.

Es ist daher eine Aufgabe der Erfindung, ein Verfahren zum Absetzen eines Notrufs eines Fahrzeugs vorzuschlagen, welches eine große Robustheit aufweist. Weitere Aufgaben der Erfindung sind, ein Steuergerät für ein Fahrzeug und eine Leitstelle zum Empfangen eine Notrufs eines Fahrzeugs bereitzustellen.

Ein Gegenstand der Erfindung ist ein Verfahren zum Absetzen eines Notrufs eines Fahrzeugs, bei dem ein Steuergerät eines Fahrzeugs nach einem Unfall automatisch eine erste Verbindung zu einer Leitstelle herstellt und über die hergestellte Verbindung einen Notruf absetzt. Das Notrufverfahren dient dem automatischen Absetzen eines Notrufs. Unter dem Unfall ist allgemein ein Notfall zu verstehen, welcher das Fahrzeug, einen Insassen des Fahrzeugs und/oder ein von einem Insassen des Fahrzeugs beobachtetes und hilfsbedürftiges Ereignis in einer Umgebung des Fahrzeugs zu verstehen. Das automatische Herstellen der ersten Verbindung wird durch ein von dem Fahrzeug bereitgestelltes Sensorsignal oder durch ein Betätigen eines Bedienelements durch einen Insassen des Fahrzeugs ausgelöst.

Erfindungsgemäß empfängt die Leitstelle den abgesetzten Notruf und sendet eine einen Misserfolg des empfangenen Notrufs anzeigende Nachricht zu dem Steuergerät, wenn der Notruf erfolglos ist, und empfängt das Steuergerät die gesendete Nachricht und stellt nach einem Beenden der ersten Verbindung automatisch eine von der ersten Verbindung separate zweite Verbindung zu der Leitstelle her. Die den Misserfolg des empfangenen Notrufs anzeigende Nachricht informiert das Steuergerät über den Misserfolg des Notrufs und ermöglicht dem Steuergerät, den Notruf über die zweite Verbindung erneut abzusetzen. Ein Misserfolg des Notrufs kann aus einem IT-Problem oder einer temporären Überlastung der Leitstelle resultieren. Dank der zweiten Verbindung ist eine Erfolgswahrscheinlichkeit des Notrufs erhöht.

Die Leitstelle kann die den Misserfolg des Notrufs anzeigende Nachricht vor dem Beenden der ersten Verbindung oder nach dem Beenden der ersten Verbindung zu dem Steuergerät senden. Ein Agent oder eine Agentin der Leitstelle kann nach dem Empfangen des Notrufs das Senden der Nachricht auslösen, wenn die Leitstelle keine geeignete Hilfeleistung bereitstellen kann.

In einer Ausführungsform sendet die Leitstelle die den Misserfolg des Notrufs anzeigende Nachricht als eine SMS-Nachricht zu dem Steuergerät. Der Kurznachrichtendienst (Short Message Service, SMS) unterstützt ein Versenden bzw. Empfangen von kurzen Texten über ein Mobilfunknetz. Ein Text der SMS-Nachricht zeigt den Misserfolg des Notrufs an. Das Steuergerät ist ausgebildet, die SMS-Nachricht zu empfangen und den Text der SMS-Nachricht zu interpretieren.

In einer weiteren Ausführungsform wird die erste Verbindung als eine digitale VolP-Verbindung hergestellt und sendet die Leitstelle die den Misserfolg des Notrufs anzeigende Nachricht vor dem Beenden der ersten Verbindung als einen VolP Reply Code zu dem Steuergerät. Die VolP-Verbindung ist eine digitale Sprechverbindung, welche einen digitalen Audiostrom eines Gesprächs überträgt. Das Steuergerät ist ausgebildet, den VoIP Reply Code zu empfangen und zu interpretieren. Die digitale VolP-Verbindung erfordert eine IP-Fähigkeit eines Mobilfunknetzes.

In noch einer Ausführungsform wird die erste Verbindung als eine analoge Sprechverbindung hergestellt und sendet die Leitstelle die den Misserfolg des Notrufs anzeigende Nachricht vor dem Beenden der ersten Verbindung als einen In-Band-Befehl zu dem Steuergerät. Der In-Band-Befehl ist ein auditiv nicht wahrnehmbares Analogsignal, welches den analogen Audiostrom überlagert. Das Steuergerät ist ausgebildet, den In-Band-Befehl zu empfangen und zu interpretieren. Der In-Band-Befehl erfordert eine CS-Fähigkeit eines Festnetzes.

Die Leitstelle kann den empfangenen Notruf an einen Backendserver weiterleiten. In diesem Fall fungiert die Leitstelle als ein Vermittler. Ein Betreiber des Backendservers kann eine spezielle Hilfeleistung erbringen. Auf diese Weise wird die Robustheit des Notrufverfahrens weiter vergrößert. Der Backendserver wird beispielsweise von einem Hersteller des Fahrzeugs bereitgestellt.

Idealerweise wird der Notruf gleichzeitig über einen von einem Sprechkanal verschiedenen Datenkanal der ersten Verbindung abgesetzt. Der Datenkanal ermöglicht ein Absetzen des Notrufs auch dann, wenn Insassen des Fahrzeugs an einem Gespräch mit der Leitstelle gehindert sind, beispielsweise infolge einer Bewusstlosigkeit oder einer Verletzung oder durch ein ausgelöstes Rückhaltesystem wie einen Airbag. Auf diese Weise wird eine Robustheit des Notrufverfahrens weiter vergrößert. Alternativ kann der Datenkanal zu einer zu der ersten Verbindung parallelen Verbindung gehören und das Fahrzeug unmittelbar mit dem Backendserver verbinden.

An dem Verfahren kann eine gesetzliche Leitstelle oder eine private Leitstelle als die Leitstelle mitwirken. Die gesetzliche Leitstelle (Public Safety Answering Point, PSAP) wird offiziell bereitgestellt. Die private Leitstelle wird von einem privaten Betreiber (Third Party Service Provider, TPSP) bereitgestellt. Auf diese Weise werden zwei zulässige Typen von Leitstellen unterstützt, wodurch eine Robustheit des Notrufverfahrens weiter vergrößert ist.

Ein weiterer Gegenstand der Erfindung ist ein Steuergerät für ein Fahrzeug zum Absetzen eines Notrufs. Das Steuergerät ist in einer Vielzahl von Fahrzeugen verbaut und kann durch Aktualisieren einer Software des Steuergeräts einfach als ein erfindungsgemäßes Steuergerät ausgebildet werden.

Erfindungsgemäß ist das Steuergerät ausgebildet, zum Absetzen eines Notrufs an einem Verfahren nach einer Ausführungsform der Erfindung mitzuwirken. Das Steuergerät ermöglicht eine große Robustheit des Notrufverfahrens und eine große Sicherheit des Fahrzeugs.

Noch ein Gegenstand der Erfindung ist eine Leitstelle zum Empfangen eines von einem Fahrzeug abgesetzten Notrufs. Die Leitstelle kann durch ein Aktualisieren einer Software einfach als eine erfindungsgemäße Leitstelle ausgebildet werden.

Erfindungsgemäß ist die Leitstelle ausgebildet, an einem Verfahren nach einer Ausführungsform der Erfindung mitzuwirken. Die Leitstelle ermöglicht eine große Robustheit des Notrufverfahrens und eine große Sicherheit des Fahrzeugs.

Weiterhin kann die Robustheit des Notrufverfahrens dadurch vergrößert werden, dass nach einem mehrmaligen erfolglosen Versuch eines Herstellens der ersten Verbindung zu einer privaten Leitstelle und/oder einer gesetzlichen Leitstelle das Steuergerät und/oder eine Kommunikationseinheit des Fahrzeugs automatisch zurückgesetzt und/oder automatisch neu gestartet wird. Nach dem Zurücksetzen und/oder Neustarten kann das Steuergerät das Herstellen der ersten Verbindung zu der privaten Leitstelle und/oder der gesetzlichen Leitstelle erneut mehrmals versuchen.

Auf diese Weise können eine auf einem Laufzeitfehler beruhende, d. h. dynamische, Fehlfunktion der Kommunikationseinheit, beispielsweise infolge einer ungünstigen Mobilfunkkonfiguration der Kommunikationseinheit, und/oder eine von einer Firmware des Steuergeräts oder der Kommunikationseinheit verursachte Fehlfunktion des Steuergeräts oder der Kommunikationseinheit, welche von einem Hersteller (Original Equipment Manufacturer, OEM) des Steuergeräts oder der Kommunikationseinheit nicht oder schwierig behebbar sind, jeweils beendet werden, was mit einer großen Robustheit des Notrufverfahrens einhergeht.

Noch eine Möglichkeit zum Vergrößern der Robustheit des Notrufverfahrens besteht darin, dass die Leitstelle den von dem Fahrzeug abgesetzten Notruf nur dann empfängt, wenn der abgesetzte Notruf von einem Agenten oder einer Agentin der Leitstelle entgegengenommen wird. Auf diese Weise wird verhindert, dass eine Telefonanlage der Leitstelle den abgesetzten Notruf empfängt, ohne dass ein Agent oder eine Agentin der Leitstelle eine geeignete Hilfeleistung bereitstellt, was mit einer großen Robustheit des Notrufverfahrens einhergeht.

Abgesehen davon kann die Robustheit des Notrufverfahrens dadurch vergrößert werden, dass das Steuergerät eine aus einer Umgebung des Fahrzeugs visuell wahrnehmbare Leuchte des Fahrzeugs steuert, um einen in der Umgebung des Fahrzeugs angeordneten Insassen des Fahrzeugs auf eine hergestellte Verbindung zu einer Leitstelle aufmerksam zu machen. Auf diese Weise wird verhindert, dass ein möglicher Notruf unterbleibt, weil der Insasse das Fahrzeug nach dem Unfall verlassen hat. Der Insasse kann in das Fahrzeug zurückkehren und den Notruf absetzen, was mit einer großen Robustheit des Notrufverfahrens einhergeht.

Die Erfindung ist anhand einer Ausführungsform in den Zeichnungen schematisch dargestellt und wird unter Bezugnahme auf die Zeichnungen weiter beschrieben. Es zeigt:

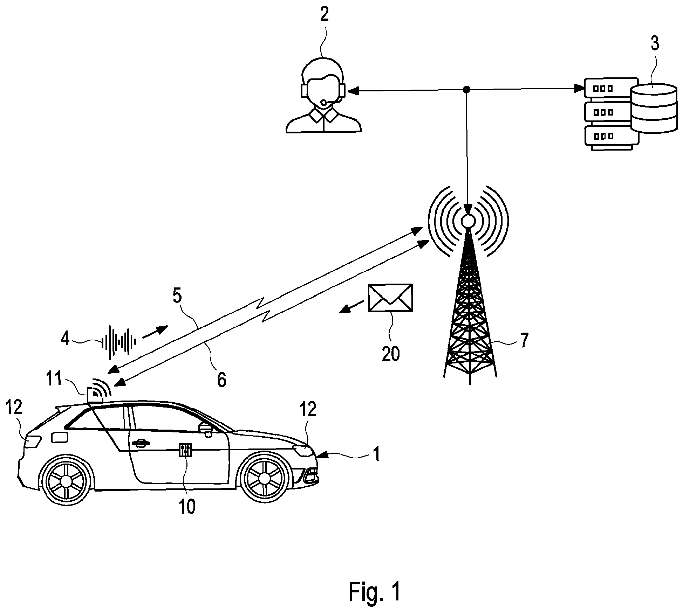

- Figur 1: in einem funktionalen Blockdiagramm ein Steuergerät nach einer Ausführungsform der Erfindung für ein Fahrzeug.

Figur 1 zeigt in einem funktionalen Blockdiagramm ein Steuergerät 10 nach einer Ausführungsform der Erfindung für ein Fahrzeug 1, welches zu dem Fahrzeug 1 gehört und zum Absetzen eines Notrufs 4 geeignet ist. Das Fahrzeug 1 umfasst ferner eine Kommunikationseinheit 11, welche ausgebildet ist, über ein Mobilfunknetz 7 erste und zweite Verbindungen 5, 6 zu einer Leitstelle 2 oder zu einem Backendserver 3 herzustellen. Die Leitstelle 2 ist zum Empfangen eines von dem Fahrzeug 1 abgesetzten Notrufs 4 geeignet.

Das Steuergerät 10 und die Leitstelle 2 sind jeweils ausgebildet, an einem Verfahren nach einer Ausführungsform der Erfindung zum Absetzen eines Notrufs 4 mitzuwirken.

Das Steuergerät 10 des Fahrzeugs 1 stellt nach einem Unfall automatisch eine erste Verbindung 5 zu der Leitstelle 2 her und setzt über die hergestellte erste Verbindung 5 einen Notruf 4 ab. Das Steuergerät 10 kann die erste Verbindung 5 als eine digitale VolP-Verbindung oder als eine analoge Sprechverbindung herstellen. Beispielsweise wirkt eine gesetzliche Leitstelle (PSAP) oder eine private Leitstelle (TPSP) als die Leitstelle 2 an dem Verfahren mit. Das Steuergerät 10 steuert vorteilhaft eine aus einer Umgebung des Fahrzeugs 1 visuell wahrnehmbare Leuchte 12 des Fahrzeugs 1.

Günstigerweise wird nach einem mehrmaligen erfolglosen Versuch eines Herstellens der ersten Verbindung 5 zu einer privaten Leitstelle und/oder einer gesetzlichen Leitstelle das Steuergerät 10 und/oder die Kommunikationseinheit 11 des Fahrzeugs 1 automatisch zurückgesetzt und/oder automatisch neu gestartet. Nach dem Zurücksetzen und/oder Neustarten kann das Steuergerät 10 das Herstellen der ersten Verbindung 5 zu der privaten Leitstelle und/oder der gesetzlichen Leitstelle erneut mehrmals versuchen.

Die Leitstelle 2 empfängt den abgesetzten Notruf 4 und sendet eine einen Misserfolg des empfangenen Notrufs 4 anzeigende Nachricht 20 zu dem Steuergerät 10, wenn der Notruf 4 erfolglos ist. Die Leitstelle 2 leitet den empfangenen Notruf 4 vorteilhaft an den Backendserver 3 weiter.

Die Leitstelle 2 empfängt idealerweise den von dem Fahrzeug 1 abgesetzten Notruf 4 nur dann, wenn der abgesetzte Notruf 4 von einem Agenten oder einer Agentin der Leitstelle 2 entgegengenommen wird.

Die Leitstelle 2 kann die den Misserfolg des Notrufs 4 anzeigende Nachricht 20 vor dem Beenden der ersten Verbindung 5 oder nach dem Beenden der ersten Verbindung 5 zu dem Steuergerät 10 senden.

Insbesondere kann die Leitstelle 2 die den Misserfolg des Notrufs 4 anzeigende Nachricht 20 als eine SMS-Nachricht zu dem Steuergerät 10 senden. Wenn das Steuergerät 10 die erste Verbindung 5 als eine digitale VoIP-Verbindung hergestellt hat, kann die Leitstelle 2 die den Misserfolg des Notrufs 4 anzeigende Nachricht 20 vor dem Beenden der ersten Verbindung 5 als einen VolP Reply Code zu dem Steuergerät 10 senden. Wenn das Steuergerät 10 die erste Verbindung 5 als eine analoge Sprechverbindung hergestellt hat, kann die Leitstelle 2 die den Misserfolg des Notrufs 4 anzeigende Nachricht 20 vor dem Beenden der ersten Verbindung 5 als einen In-Band-Befehl zu dem Steuergerät 10 senden.

Das Steuergerät 10 empfängt die gesendete Nachricht 20 und stellt nach einem Ende der ersten Verbindung 5 automatisch eine von der ersten Verbindung 5 separate zweite Verbindung 6 zu der Leitstelle 2 her.

Der Notruf 4 kann gleichzeitig über einen von einem Sprechkanal verschiedenen Datenkanal der ersten Verbindung 5 abgesetzt werden, insbesondere unmittelbar an den Backendserver 3.

### BEZUGSZEICHENLISTE:

- 1: Fahrzeug
- 10: Steuergerät
- 11: Kommunikationseinheit
- 12: Leuchte
- 2: Leitstelle
- 20: Nachricht
- 3: Backendserver
- 4: Notruf
- 5: erste Verbindung
- 6: zweite Verbindung
- 7: Mobilfunknetz

## Patentansprüche

1. Verfahren zum Absetzen eines Notrufs (4) eines Fahrzeugs (1), bei dem
- ein Steuergerät (10) eines Fahrzeugs (1) nach einem Unfall automatisch eine erste Verbindung (5) zu einer Leitstelle (2) herstellt und über die hergestellte erste Verbindung (5) einen Notruf (4) absetzt;
- die Leitstelle (2) den abgesetzten Notruf (4) empfängt und eine einen Misserfolg des empfangenen Notrufs (4) anzeigende Nachricht (20) zu dem Steuergerät (10) sendet, wenn der Notruf (4) erfolglos ist;
- das Steuergerät (10) die gesendete Nachricht (20) empfängt und nach einem Ende der ersten Verbindung (5) automatisch eine von der ersten Verbindung (5) separate zweite Verbindung (6) zu der Leitstelle (2) herstellt.

2. Verfahren nach Anspruch 1, bei dem die Leitstelle (2) die den Misserfolg des Notrufs (4) anzeigende Nachricht (20) vor dem Beenden der ersten Verbindung (5) oder nach dem Beenden der ersten Verbindung (5) zu dem Steuergerät (10) sendet.

3. Verfahren nach Anspruch 1 oder 2, bei dem die Leitstelle (2) die den Misserfolg des Notrufs (4) anzeigende Nachricht (20) als eine SMS-Nachricht zu dem Steuergerät (10) sendet.

4. Verfahren nach Anspruch 1 oder 2, bei dem die erste Verbindung (5) als eine digitale VolP-Verbindung hergestellt wird und die Leitstelle (2) die den Misserfolg des Notrufs (4) anzeigende Nachricht (20) vor dem Beenden der ersten Verbindung (5) als einen VolP Reply Code zu dem Steuergerät (10) sendet.

5. Verfahren nach Anspruch 1 oder 2, bei dem die erste Verbindung (5) als eine analoge Sprechverbindung hergestellt wird und die Leitstelle (2) die den Misserfolg des Notrufs (4) anzeigende Nachricht (20) vor dem Beenden der ersten Verbindung (5) als einen In-Band-Befehl zu dem Steuergerät (10) sendet.

6. Verfahren nach einem der Ansprüche 1 bis 5, bei dem die Leitstelle (2) den empfangenen Notruf (4) an einen Backendserver (3) weiterleitet.

7. Verfahren nach einem der Ansprüche 1 bis 6, bei dem der Notruf (4) gleichzeitig über einen von einem Sprechkanal verschiedenen Datenkanal der ersten Verbindung (5) abgesetzt wird.

8. Verfahren nach einem der Ansprüche 1 bis 7, bei dem an dem Verfahren eine gesetzliche Leitstelle oder eine private Leitstelle als die Leitstelle (2) mitwirkt.

9. Steuergerät (10) für ein Fahrzeug (1), welches ausgebildet ist, zum Absetzen eines Notrufs (4) an einem Verfahren nach einem der Ansprüche 1 bis 8 mitzuwirken.

10. Leitstelle (2) zum Empfangen eines von einem Fahrzeug (1) abgesetzten Notrufs (4), welche ausgebildet ist, an einem Verfahren nach einem der Ansprüche 1 bis 8 mitzuwirken.

## Claims

1. A method for dispatching an emergency call (4) from a vehicle (1), in which
- a controller (10) of a vehicle (1) automatically establishes a first connection (5) to a control center (2) after an accident and dispatches an emergency call (4) via the established first connection (5);
- the control center (2) receives the dispatched emergency call (4) and sends a message (20) indicating a failure of the received emergency call (4) to the controller (10) if the emergency call (4) is unsuccessful;
- the controller (10) receives the sent message (20) and automatically establishes a second connection (6) to the control center (2), separate from the first connection (5), after an end of the first connection (5).

2. The method according to claim 1, in which the control center (2) sends the message (20) indicating the failure of the emergency call (4) to the controller (10) before the first connection (5) is terminated or after the first connection (5) is terminated.

3. The method according to claim 1 or 2, in which the control center (2) sends the message (20) indicating the failure of the emergency call (4) as an SMS message to the controller (10).

4. The method according to claim 1 or 2, in which the first connection (5) is established as a digital VolP connection and the control center (2) sends the message (20) indicating the failure of the emergency call (4) to the controller (10) as a VolP reply code before the first connection (5) is terminated.

5. The method according to claim 1 or 2, in which the first connection (5) is established as an analog voice connection and the control center (2) sends the message (20) indicating the failure of the emergency call (4) to the to the controller (10) as an in-band command before the first connection (5) is terminated.

6. The method according to any of claims 1 to 5, in which the control center (2) forwards the received emergency call (4) to a backend server (3).

7. The method according to any of claims 1 to 6, in which the emergency call (4) is sent simultaneously via a data channel of the first connection (5) that is different from a speech channel.

8. The method according to any of claims 1 to 7, in which a statutory control center or a private control center participates in the method as the control center (2).

9. A controller (10) for a vehicle (1) configured to participate in a method according to any of claims 1 to 8 for dispatching an emergency call (4).

10. A control center (2) for receiving an emergency call (4) dispatched by a vehicle (1), which is configured to participate in a method according to any of claims 1 to 8.

## Revendications

1. Procédé permettant d'émettre un appel d'urgence (4) d'un véhicule (1), dans lequel
- un appareil de commande (10) d'un véhicule (1) établit automatiquement une première liaison (5) avec un centre de coordination (2) après un accident et émet un appel d'urgence (4) via la première liaison (5) établie ;
- le centre de coordination (2) reçoit l'appel d'urgence (4) émis et envoie un message (20) indiquant un échec de l'appel d'urgence (4) reçu à l'appareil de commande (10) si l'appel d'urgence (4) n'aboutit pas;
- l'appareil de commande (10) reçoit le message (20) envoyé et, à la fin de la première liaison (5), établit automatiquement une deuxième liaison (6) séparée de la première liaison (5) avec le centre de coordination (2).

2. Procédé selon la revendication 1, dans lequel le centre de coordination (2) envoie le message (20) indiquant l'échec de l'appel d'urgence (4) à l'appareil de commande (10) avant la fin de la première liaison (5) ou après la fin de la première liaison (5).

3. Procédé selon la revendication 1 ou 2, dans lequel le centre de coordination (2) envoie le message (20) indiquant l'échec de l'appel d'urgence (4) sous la forme d'un message SMS à l'appareil de commande (10).

4. Procédé selon la revendication 1 ou 2, dans lequel la première liaison (5) est établie sous la forme d'une liaison VolP numérique et le centre de coordination (2) envoie le message (20) indiquant l'échec de l'appel d'urgence (4) à l'appareil de commande (10) sous la forme d'un code de réponse VolP avant la fin de la première liaison (5).

5. Procédé selon la revendication 1 ou 2, dans lequel la première liaison (5) est établie sous la forme d'une liaison vocale analogique et le centre de coordination (2) envoie le message (20) indiquant l'échec de l'appel d'urgence (4) à l'appareil de commande (10) sous la forme d'une commande dans la bande avant la fin de la première liaison (5).

6. Procédé selon l'une des revendications 1 à 5, dans lequel le centre de coordination (2) transmet l'appel d'urgence (4) reçu à un serveur dorsal (3).

7. Procédé selon l'une des revendications 1 à 6, dans lequel l'appel d'urgence (4) est émis simultanément via un canal de données de la première liaison (5) différent d'un canal vocal.

8. Procédé selon l'une des revendications 1 à 7, dans lequel un centre de coordination réglementaire ou un centre de coordination privé intervient dans le procédé en tant que centre de coordination (2).

9. Appareil de commande (10) pour un véhicule (1), conçu pour intervenir dans un procédé selon l'une des revendications 1 à 8 pour émettre un appel d'urgence (4).

10. Centre de coordination (2) destiné à recevoir un appel d'urgence (4) émis par un véhicule (1) et conçu pour intervenir dans un procédé selon l'une des revendications 1 à 8.
